# EUROPÄISCHE PATENTSCHRIFT

(11) **EP 2 721 721 B1**
(45) Veröffentlichungstag und Bekanntmachung des Hinweises auf die Patenterteilung: **24.10.2018**
(21) Anmeldenummer: 12742840.7
(22) Anmeldetag: 20.07.2012
(51) Int. Cl.: H02K 55/00, H02K 55/04, H02P 29/60, H02K 1/00, H02P 29/66, H02P 29/62

(54) **ELEKTRISCHE MASCHINE**
ELECTRIC MACHINE
MACHINE ÉLECTRIQUE

(30) Priorität: 25.07.2011 DE 102011079727
(43) Veröffentlichungstag der Anmeldung: 23.04.2014
(73) Patentinhaber: Siemens Aktiengesellschaft, 80333 München (DE)
(72) Erfinder: KUMMETH, Peter, 91074 Herzogenaurach (DE); SCHMIDT, Heinz, 91096 Möhrendorf (DE)
(86) Internationale Anmeldenummer: PCT/EP2012/064335
(87) Internationale Veröffentlichungsnummer: WO 2013/014100

(56) Entgegenhaltungen:
- EP-A1- 0 508 936
- DE-A1- 2 822 421
- US-A1- 2003 052 554
- US-A1- 2006 166 832
- US-A1- 2010 038 986

## Beschreibung

Die Erfindung betrifft eine elektrische Maschine sowie ein Verfahren zum Betreiben einer elektrischen Maschine.

Die Verwendung von Spulen aus einem supraleitenden Material in einem Rotor einer elektrischen Maschine als solche ist bekannt. So beschreibt beispielsweise die Offenlegungsschrift DE 10 2004 040 754 A1 eine Rechteckspule aus bandförmigen Supraleitern zur Verwendung in einer elektrischen Maschine.

In der Regel müssen diese supraleitenden Spulen beim Betrieb der elektrischen Maschine permanent mit einem elektrischen Strom versorgt werden, damit sie im Rotor ein Rotormagnetfeld erzeugen. Wenn der elektrische Strom abgeschaltet wird, verschwindet auch das entsprechende Rotormagnetfeld.

Die Offenlegungsschrift EP 0 508 936 A1 zeigt einen Motor umfassend einen Stator und einen Rotor. Der Rotor kann mittels eines Kryostaten unterhalb einer kritischen Temperatur abgekühlt werden.

Die Offenlegungsschrift US 2010/0038986 A1 zeigt eine elektrodynamische Vorrichtung umfassend einen Rotor mit vier Rotorarmen, an deren jeweiligen Ende ein Supraleiter angeordnet ist.

Die Offenlegungsschrift DE 28 22 241 A1 zeigt eine Einrichtung zur Erzeugung eines magnetischen Feldes. Hierbei sind Schichten aus thermisch gut leitendem Material vorgesehen, die eine Vielzahl von Heizelementen enthalten.

Die Offenlegungsschrift US 2003/052554 A1 zeigt einen supraleitenden elektrischen Motor.

Die Offenlegungsschrift US 2006/0166832 A1 zeigt eine Magnetisierungsvorrichtung umfassend eine Scheibe, die mehrere Supraleiter umfasst.

Die der Erfindung zugrunde liegende Aufgabe kann daher darin gesehen werden, eine elektrische Maschine anzugeben, welche es ermöglicht, auch ohne eine Versorgung mit elektrischem Strom ein Rotormagnetfeld aufrecht zu erhalten.

Die der Erfindung zugrunde liegende Aufgabe kann auch darin gesehen werden, ein entsprechendes Verfahren zum Betreiben einer elektrischen Maschine anzugeben.

Diese Aufgaben werden mittels des jeweiligen Gegenstands der unabhängigen Ansprüche gelöst. Vorteilhafte Ausgestaltungen sind Gegenstand von jeweils abhängigen Unteransprüchen.

Nach einem Aspekt wird eine elektrische Maschine bereitgestellt. Die elektrische Maschine umfasst einen Stator und einen drehbar gelagerten Rotor. Der Rotor weist einen kühlbaren magnetisierbaren Rotorabschnitt aus einem supraleitenden Material auf. Ferner ist eine Steuerung vorgesehen, welche ausgebildet ist, einen Statorstrom zum Induzieren eines magnetischen Flusses durch das supraleitende Material zu steuern, so dass sich ein magnetischer Fluss in dem supraleitenden Material ausbildet.

Gemäß einem weiteren Aspekt ist ein Verfahren zum Betreiben einer elektrischen Maschine geschaffen, wobei die Maschine einen Stator und einen drehbar gelagerten Rotor umfasst. Der Rotor weist einen kühlbaren magnetisierbaren Rotorabschnitt aus einem supraleitenden Material auf. Es wird ein magnetischer Fluss durch das supraleitende Material ausgebildet, indem ein Statorstrom zum Induzieren des magnetischen Flusses in dem supraleitenden Material gesteuert wird. Das supraleitende Material wird nach dem Ausbilden des magnetischen Flusses auf eine Temperatur unterhalb der kritischen Temperatur des supraleitenden Materials abgekühlt, um den magnetischen Fluss zu verankern.

Die Erfindung umfasst also den Gedanken, den Statorstrom für eine Aufmagnetisierung, also das Ausbilden des magnetischen Flusses, des magnetisierbaren Rotorabschnitts zu verwenden. Nachdem der Rotorabschnitt aufmagnetisiert ist, wird das supraleitende Material auf eine Temperatur unterhalb der kritischen Temperatur abgekühlt. Dieses Abkühlen bewirkt in vorteilhafter Weise, dass der magnetische Fluss in dem supraleitenden Material verankert wird. Der magnetische Fluss wird sozusagen eingefroren. Das Verankern kann insbesondere auch als ein Verpinnen bezeichnet werden. Der Rotorabschnitt kann insofern in vorteilhafter Weise insbesondere einen Pol eines Magnetfeldes bilden. Die kritische Temperatur kann auch als eine Sprungtemperatur bezeichnet werden und ist insbesondere die Temperatur, bei der im Fall eines Unterschreitens der elektrische Widerstand des supraleitenden Materials auf Null Ohm abfällt.

Selbst wenn jetzt der Statorstrom abgeschaltet wird, bleibt in vorteilhafter Weise der verankerte magnetische Fluss erhalten. Insofern bleibt auch ohne eine Bestromung der elektrischen Maschine in vorteilhafter Weise ein Rotormagnetfeld erhalten.

Des Weiteren ist es für die Aufmagnetisierung nicht erforderlich, dass zusätzliche Spulen vorgesehen sind, welche beispielsweise im Rotor angeordnet, beispielsweise um den Rotorabschnitt gewickelt, sind, da erfindungsgemäß der in einer elektrischen Maschine übliche und insofern bereits vorhandene Stator zwecks Induzierung eines magnetischen Flusses in dem supraleitenden Material bestromt wird. Es kann somit in vorteilhafter Weise insbesondere auch eine Nachrüstung von bekannten elektrischen Maschinen mittels der Steuerung vorgesehen sein. Ferner kann durch das Einsparen von solchen zusätzlichen Spulen in vorteilhafter Weise Material und ein Fertigungsaufwand eingespart werden.

Der Rotor kann insbesondere auch als Läufer bezeichnet werden. Der Stator kann insbesondere auch als Ständer bezeichnet werden. Das supraleitende Material kann insbesondere auch als Bulksupraleiter bezeichnet werden. Ein Abschnitt kann insbesondere auch als ein Bereich bezeichnet werden und kennzeichnet insbesondere eine räumlich zusammenhängende Fläche.

Nach einer Ausführungsform kann die elektrische Maschine insbesondere als Synchronmaschine gebildet sein.

In einer anderen Ausführungsform umfasst der Stator eine oder mehrere Wicklungen, insbesondere drei Wicklungen, welche insbesondere von einer oder mehreren Spulen umfasst sein können, durch welche der Statorstrom fließen kann. Die Wicklungen können insbesondere auch aus einem weiteren supraleitenden Material gebildet sein, so dass bei entsprechender Kühlung der Wicklungen unterhalb der Sprungtemperatur ein besonders verlustarmer Betrieb der elektrischen Maschine ermöglicht ist.

In einer weiteren Ausführungsform kann zur Bestromung des Stators, insbesondere der Wicklungen, eine DC-Stromquelle vorgesehen sein. DC steht hierbei für "Direct Current", also Gleichstrom. Es kann beispielsweise auch vorgesehen sein, dass die einzelnen Wicklungen jeweils an eine eigene DC-Stromquelle geschaltet werden. Bei einer sternförmigen Schaltung der Wicklungen kann vorzugsweise eine für alle Wicklungen gemeinsame DC-Stromquelle vorgesehen sein. Insbesondere kann der Stator einen Umrichter umfassen, welcher für eine Ständerbestromung verwendet wird, so dass in dieser Ausführungsform in vorteilhafter Weise auch optional auf eine weitere DC-Stromquelle verzichtet werden kann. Die Steuerung steuert vorzugsweise die vorgenannten DC-Stromquellen bzw. den Umrichter. Die Steuerung kann insbesondere in den Umrichter integriert sein. Vorzugsweise werden die Wicklungen beim Aufmagnetisieren gemeinsam oder insbesondere auch unabhängig von einander bestromt. So kann ein magnetischer Fluss besonders genau eingestellt werden.

Nach einer weiteren Ausführungsform kann die Steuerung ferner ausgebildet ist, den Statorstrom abhängig von einer Temperatur des supraleitenden Materials zu steuern. Beispielsweise kann vorgesehen sein, dass der Statorstrom abgeschaltet wird, nachdem der Rotorabschnitt unterhalb der kritischen Temperatur des supraleitenden Materials gekühlt wurde. Da unterhalb der kritischen Temperatur kein weiteres Durchdringen eines mittels des Statorstroms induzierten magnetischen Flusses mehr möglich ist, würde eine weitere Bestromung des Stators keinen weiteren diesbezüglichen Effekt bewirken. Aufgrund des Abschaltens wird somit in vorteilhafter Weise Energie eingespart. Der Statorstrom wird also besonders effizient genutzt. Zur Messung der Temperatur können insbesondere ein oder mehrere Temperatursensoren vorgesehen sein.

Gemäß einer Ausführungsform kann vorgesehen sein, dass die Steuerung den Statorstrom abhängig von einem gemessenen Rotormagnetfeld steuert. Insbesondere können ein oder mehrere Magnetfeldsensoren, beispielsweise Hallsensoren, zur Messung des Rotormagnetfelds vorgesehen sein. Da das Rotormagnetfeld insbesondere mittels des magnetischen Flusses in bzw. durch das supraleitende Material gebildet wird, welcher seinerseits wiederum durch den Generatorstrom in dem supraleitenden Material induziert wird, kann insofern in vorteilhafter Weise mittels der Steuerung des Statorstroms abhängig von dem gemessenen Rotormagnetfeld ein bestimmtes für eine bestimmte Anwendung bzw. Maschine geeignetes Rotormagnetfeld erzeugt werden.

In noch einer weiteren Ausführungsform kann vorgesehen sein, dass der Rotor einen mittels eines Kühlfluids kühlbaren Polkern umfasst, an welchem der Rotorabschnitt angeordnet ist. Über den Polkern kann somit in vorteilhafter Weise eine Kühlung des Rotorabschnitts bewirkt werden, so dass es insbesondere ermöglicht ist, das supraleitende Material unterhalb seiner kritischen Temperatur abzukühlen. Das zu verwendende Kühlfluid hängt hierbei insbesondere von der kritischen Temperatur des supraleitenden Materials ab. Beispielsweise kann flüssiger Stickstoff, flüssiges Neon oder flüssiges Helium zur Kühlung des Polkerns verwendet werden. Der Polkern kann beispielsweise aus einem ferromagnetischen Material gebildet sein und trägt somit in vorteilhafter Weise zur Ausbildung eines Rotormagnetfelds mit bei. Ein Kühlfluid im Sinne der vorliegenden Erfindung kann insbesondere ein Kühlgas oder eine Kühlflüssigkeit sein.

Nach einer Ausführungsform ist zwischen dem Polkern und dem Rotorabschnitt eine thermische Kopplungsschicht gebildet. Somit ist in vorteilhafter Weise eine genau definierte thermische Ankopplung des supraleitenden Materials an dem Polkern ermöglicht. Vorzugsweise weist die thermische Kopplungsschicht eine vorbestimmte thermische Leitfähigkeit auf, so dass eine Übertragung von thermischer Energie zwischen dem Polkern und dem Rotorabschnitt genau eingestellt werden kann. Beispielsweise kann der Rotorabschnitt thermisch schwach an dem Polkern gekoppelt sein. Das heißt insbesondere, dass eine Erwärmung des supraleitenden Materials nicht oder kaum zu einer Erwärmung des Polkerns führt. Beispielsweise kann vorgesehen sein, dass die thermische Kopplungsschicht eine thermisehe Diode umfasst, welche eine Übertragung von thermischer Energie im Wesentlichen nur in eine Richtung zulässt. Eine solche thermische Diode kann beispielsweise Diamant sein.

In einer anderen Ausführungsform ist an dem Rotorabschnitt eine Heizung für eine Erwärmung über die kritische Temperatur des supraleitenden Materials angeordnet. Somit ist es insbesondere in vorteilhafter Weise ermöglicht, einen bereits unterhalb der kritischen Temperatur abgekühlten Rotorabschnitt wieder soweit ausreichend zu erwärmen, dass ein Durchdringen von magnetischen Fluss durch das supraleitende Material ermöglicht ist, so dass sich als Folge ein entsprechendes Rotormagnetfeld ausbildet. So kann beispielsweise in vorteilhafter Weise auch während des Betriebs der elektrischen Maschine das Rotormagnetfeld erneuert oder verändert werden, wobei hierbei der Rotor nicht rotieren sollte. Insbesondere kann so auch die Magnetisierungsdauer des Rotors auf eine kurze Zeit begrenzt werden, da der Rotorabschnitt bereits kalt ist und auch kalt bleibt. Vorzugsweise wird also der Rotorabschnitt zunächst unterhalb der kritischen Temperatur abgekühlt und erst dann aufmagnetisiert, indem die Heizung eingeschaltet wird. Beispielsweise wird ein kurzer Heizimpuls auf den Rotorabschnitt beaufschlagt, so dass sich der Rotorabschnitt auf eine Temperatur oberhalb der kritischen Temperatur erwärmt, wobei oberhalb im Sinne der Erfindung allgemein insbesondere 30 K, insbesondere 20 K, beispielsweise 10 K, vorzugsweise 5 K oberhalb der kritischen Temperatur bedeuten kann. Dann erst wird ein magnetischer Fluss durch den Rotorabschnitt induziert, indem insbesondere der Stator bestromt wird. Anschließend wird die Heizung abgeschaltet. Die Magnetisierungsdauer, also die zeitliche Dauer, die es braucht, bis der Rotorabschnitt aufmagnetisiert ist, ist hierbei wesentlich kürzer, als wenn in dem Rotorabschnitt bei Raumtemperatur ein magnetischer Fluss induziert und dann von Raumtemperatur auf unterhalb der kritischen Temperatur abgekühlt werden muss. Damit kann folglich auch in vorteilhafter Weise der Stator kürzer bestromt werden, was weiterhin in vorteilhafter Weise eine Belastung des Stators vermeidet bzw. verringert. Somit ist es beispielsweise in vorteilhafter Weise ermöglicht, den Stator kurz an seiner Lastgrenze bzw. über dieser für die Aufmagnetisierung zu betreiben, da die entsprechende Zeitdauer in der Regel noch tolerierbar ist.

Gemäß einer weiteren Ausführungsform kann die Heizung als eine Heizfolie gebildet, welche insbesondere auf das supraleitende Material geklebt ist. Das Vorsehen einer Heizfolie hat insbesondere den Vorteil, dass dadurch in einfacher Weise auch eine große Oberfläche des supraleitenden Materials erwärmt werden kann.

Gemäß einer Ausführungsform kann das supraleitende Material beispielsweise ein Hochtemperatur-supraleitendes (HT_{c}S) Material sein, wobei T_{c} für die kritische Temperatur steht. Im Folgenden wird für HT_{c}S auch einfach nur HTS verwendet. Das supraleitende Material kann beispielsweise YBa₂Cu₃O₇, Bi₂Sr₂CaCuO₈, (BiPb) ₂Sr₂Ca₂Cu₃O₁₀ oder Magnesiumdiborid sein. Bei einem HTS-Material kann die kritische Temperatur beispielsweise gleich oder größer 23 K betragen.

Nach noch einer weiteren Ausführungsform kann vorgesehen sein, dass der Rotorabschnitt aus einer oder mehreren Kacheln aus dem supraleitenden Material gebildet sind. Die Kacheln können beispielsweise aufgeklebt sein, insbesondere mittels eines Epoxydharz-Klebers. Vorzugsweise sind die Kacheln gleich oder unterschiedlich gebildet.

In einer anderen Ausführungsform kann die Steuerung in Software und/oder Hardware gebildet sein. Die Steuerung kann vorzugsweise als Steuergerät gebildet sein.

In einer weiteren Ausführungsform können auch mehrere Rotorabschnitte aus einem supraleitenden Material gebildet sein. Diese mehreren Rotorabschnitte können insbesondere paarweise gegenüberliegend angeordnet sein, so dass sie in vorteilhafter Weise entgegengesetzte Pole eines Magnetfeldes bilden. Eine Anzahl an Rotorabschnitten ist insbesondere eine gerade Zahl, das heißt insbesondere durch zwei teilbar. Beispielsweise können 4, 6, 8, 10 oder 12 Rotorabschnitte gebildet sein, so dass in vorteilhafter Weise eine elektrische Maschine mit einer entsprechenden Polzahl gebildet ist. Beispielsweise sind die Rotorabschnitte gleich oder unterschiedlich gebildet.

Nach einer anderen Ausführungsform kann vorgesehen sein, dass der Rotor in einem Kryostaten für eine thermische Isolierung angeordnet ist. Somit kann in vorteilhafter Weise eine besonders effiziente und sparsame Kühlung des Rotors bewirkt werden. Insbesondere kann der Kryostat evakuiert sein. Vorzugsweise kann der Kryostat Teil des Rotors sein bzw. von diesem umfasst sein. Das heißt insbesondere, dass der Kryostat mit dem Rotor bei einer Rotation des Rotors mitrotieren kann. Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Hierbei zeigen
- Fig. 1: eine elektrische Maschine,
- Fig. 2: ein Ablaufdiagramm eines Verfahrens zum Betreiben einer elektrischen Maschine,
- Fig. 3: eine weitere elektrische Maschine,
- Fig. 4: eine Schnittansicht durch eine andere elektrische Maschine und
- Fig. 5: ein Ablaufdiagramm eines Verfahrens zum Betreiben der elektrischen Maschine aus Fig. 4.

Im Folgenden werden für gleiche Merkmale gleiche Bezugszeichen verwendet.

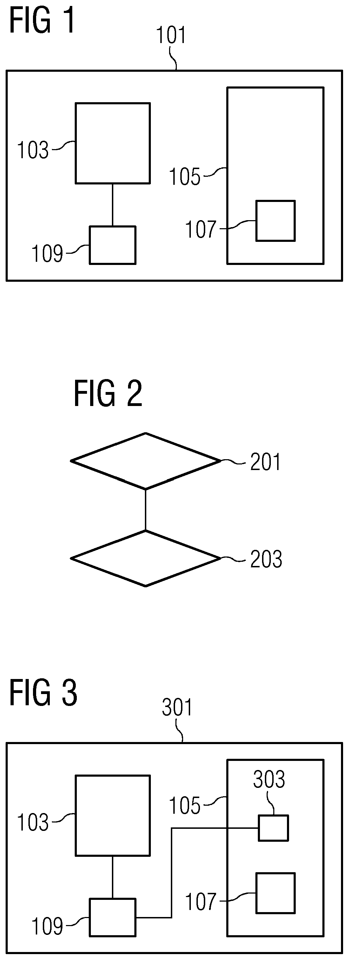

Fig. 1 zeigt eine elektrische Maschine 101. Die Maschine 101 umfasst einen Stator 103 und einen drehbar gelagerten Rotor 105. Der Rotor 105 umfasst einen kühlbaren magnetisierbaren Rotorabschnitt 107 aus einem supraleitenden Material. Ferner ist eine Steuerung 109 vorgesehen, welche eine Bestromung des Stators 103 steuert, so dass aufgrund des Statorstroms ein magnetischer Fluss in dem Rotorabschnitt 107 induziert wird. Sofern eine Temperatur des supraleitenden Materials oberhalb der kritischen Temperatur liegt, wird sich in vorteilhafter Weise ein magnetischer Fluss durch das supraleitende Material ausbilden. Der Rotorabschnitt 107 wird somit in vorteilhafter Weise aufmagnetisiert.

Nach der Aufmagnetisierung wird der Rotorabschnitt 107 auf eine Temperatur unterhalb der kritischen Temperatur heruntergekühlt, so dass sich in vorteilhafter Weise der magnetische Fluss in dem supraleitenden Material verankert, was in vorteilhafter Weise ein entsprechendes Rotormagnetfeld bildet. Sollte jetzt die Steuerung 109 den Statorstrom ausschalten oder sollte dieser aufgrund eines Defektes oder Stromausfalls ausfallen, so bleibt die Magnetisierung des Rotorabschnitts 107 und damit auch das Rotormagnetfeld erhalten, solange die Temperatur des supraleitenden Materials unterhalb der kritischen Temperatur bzw. Sprungtemperatur liegt.

Fig. 2 zeigt ein Ablaufdiagramm eines Verfahrens zum Betreiben einer elektrischen Maschine. Bei der Maschine kann es sich beispielsweise um die Maschine 101 in Fig. 1 handeln.

In einem Schritt 201 wird ein Statorstrom gesteuert, welcher in dem supraleitenden Material einen magnetischen Fluss induziert, so dass sich ein magnetischer Fluss durch das supraleitende Material ausbildet. In einem Schritt 203 wird dann das supraleitende Material auf eine Temperatur unterhalb der kritischen Temperatur abgekühlt, um den magnetischen Fluss in dem supraleitenden Material zu verankern. Falls das supraleitende Material bereits eine Temperatur von unterhalb der Sprungtemperatur aufweist, kann insbesondere vorgesehen sein, dass vor der Bestromung des Stators, das supraleitende Material auf eine Temperatur oberhalb der Sprungtemperatur erwärmt wird, so dass in vorteilhafter Weise ein Durchdringen des magnetischen Flusses durch das supraleitende Material ermöglicht ist.

Fig. 3 zeigt eine weitere elektrische Maschine 301, welche analog zu der elektrischen Maschine 101 in Fig. 1 gebildet ist. Zusätzlich zu der elektrischen Maschine 101 weist die elektrische Maschine 301 einen Magnetfeldsensor 303 auf, welcher in dem Rotor 105 angeordnet. Der Magnetfeldsensor 303 kann beispielsweise ein Hallsensor sein. Mittels des Magnetfeldsensors 303 ist es in vorteilhafter Weise ermöglicht, das Rotormagnetfeld zu messen. Dieser Messwert wird an die Steuerung 109 übermittelt, die dann abhängig von dem gemessenen Rotormagnetfeld die Bestromung für den Stator 103 steuern kann.

In einer nicht gezeigten Ausführungsform können die elektrischen Maschinen 101 und 301 eine oder mehrere DC-Stromquellen umfassen, welche Wicklungen des Stators bestromen können. Die DC-Stromquellen werden vorzugsweise mittels der Steuerung 109 gesteuert. Hierbei kann insbesondere vorgesehen sein, dass die Wicklungen gemeinsam oder unabhängig von einander bestromt werden.

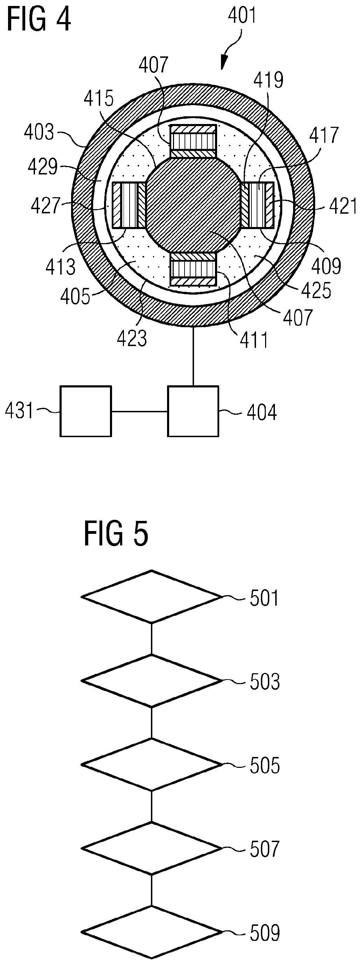

Fig. 4 zeigt eine Schnittansicht durch eine andere elektrische Maschine 401. Die elektrische Maschine 401 umfasst einen Stator 403 mit Statorwicklungen (nicht gezeigt). Die Statorwicklungen werden mittels einer DC-Stromquelle 404 bestromt. Des Weiteren umfasst die elektrische Maschine 401 einen in dem Stator 403 angeordneten Rotor 405 umfassend einen Polkern 407. Der Polkern 407 kann mittels eines Kühlfluids, beispielsweise flüssiges Helium, flüssiger Stickstoff oder flüssiges Neon, gekühlt werden. Der Rotor 405 weist ferner vier magnetisierbare Rotorabschnitte 407, 409, 411 und 413 auf, welche gleich gebildet sind. Die Rotorabschnitte 407, 409, 411 und 413 sind jeweils im 90°-Winkel versetzt zu einander auf einer Außenfläche 415 des Polkerns 407 angeordnet. Da die vier Rotorabschnitte 407, 409, 411 und 413 gleich gebildet sind, wird im Folgenden der Aufbau des Rotorabschnitts 409 beschrieben. Der entsprechende Aufbau der Rotorabschnitte 407, 411 und 413 ergibt sich analog.

Der Rotorabschnitt 409 umfasst ein supraleitendes Material 417, welches mittels einer thermischen Kopplungsschicht 419 an die Außenfläche 415 des Polkerns 407 angekoppelt ist. Die thermische Kopplungsschicht 419 weist einen bestimmten Wärmeleitkoeffizienten auf, so dass bei Erwärmung des supraleitenden Materials 417 sich der Polkern 407 kaum oder nur unwesentlich erwärmt. Es handelt sich insofern insbesondere um eine schwache thermische Ankopplung.

Auf einer der thermischen Kopplungsschicht 419 abgewandten Seite des supraleitenden Materials 417 ist eine Heizfolie 421 aufgeklebt, beispielsweise mittels eines Epoxydharz-Klebers, welche das supraleitende Material 417 zumindest bis auf eine Temperatur oberhalb der kritischen Temperatur erwärmen kann. Das supraleitende Material 417 ist vorzugsweise als eine supraleitende Kachel gebildet, welche mittels der Kopplungsschicht 419 an den Polkern 407 angekoppelt ist. Die Kopplungsschicht 419 kann beispielsweise ein thermischer Kleber sein.

Ferner ist ein Kryostat 423 vorgesehen, wobei in einem Kryostatinnenraum 425, welcher vorzugsweise zwecks thermischer Isolierung evakuiert werden kann, der Rotor angeordnet ist. Hierbei ist zwischen einer Kryostataußenwand 427 und dem Stator 403 ein Spalt 429 gebildet, welcher beispielsweise ebenfalls zwecks thermischer Isolierung evakuiert sein kann.

In einer nicht gezeigten Ausführungsform können auch mehr oder weniger als vier Rotorabschnitte gebildet sein, beispielsweise zwei, sechs, acht, zehn oder zwölf Rotorabschnitte, welche insbesondere paarweise gegenüberliegend auf der Außenfläche 415 des Polkerns 407 angeordnet sind. Die einzelnen Rotorabschnitte eines solchen Paares bilden insbesondere jeweils einen Pol eines Magnetfeldes.

Die elektrische Maschine 401 umfasst ferner ein Steuergerät 431, welche die DC-Stromquelle 404 steuert, so dass in vorteilhafter Weise eine Steuerung der Bestromung der Statorwicklungen ermöglicht ist. Obwohl in Fig. 4 nicht explizit eingezeichnet, kann vorgesehen sein, dass das Steuergerät 431 auch die elektrische Heizfolie 421 steuert.

Fig. 5 zeigt ein Ablaufdiagramm eines Verfahrens zum Betreiben der elektrischen Maschine 401.

In einem Schritt 501 wird der Rotor 407 abgekühlt bis auf eine Temperatur unterhalb der kritischen Temperatur des supraleitenden Materials 417, so dass insbesondere auch das supraleitende Material 417 selber unterhalb der kritischen Temperatur abgekühlt wird. Anschließend wird in einem Schritt 503 das supraleitende Material 417, falls erforderlich, bis auf eine Temperatur oberhalb der kritischen Temperatur mittels der Heizfolie 421 erwärmt. Aufgrund der schwachen thermischen Ankopplung wird sich der Polkern 407 nicht oder nur vernachlässigbar erwärmen. Insbesondere ist eine Verweildauer des supraleitenden Materials 417 bei der Temperatur oberhalb der kritischen Temperatur entsprechend kurz bemessen, um eine starke Erwärmung des Polkerns 407 zu vermeiden.

Nun werden in einem Schritt 505 die Statorwicklungen des Stators 403 mittels der DC-Gleichstromquelle 404 bestromt. Der Statorstrom induziert in dem supraleitenden Material 417 einen magnetischen Fluss, welcher das supraleitende Material 417 durchdringt und so das supraleitende Material 417 aufmagnetisiert. Nach der Aufmagnetisierung wird in einem Schritt 507 die elektrische Heizfolie 421 abgeschaltet, so dass sich das supraleitende Material wieder auf eine Temperatur unterhalb der Sprungtemperatur abkühlt. Das Abkühlen bewirkt in vorteilhafter Weise, dass der magnetische Fluss in dem supraleitenden Material 417 eingefroren bzw. verankert wird. Sobald also die Temperatur des supraleitenden Materials 417 unterhalb der Sprungtemperatur gefallen ist, wird in einem Schritt 509 die DC-Stromquelle 404 ausgeschaltet, so dass eine Bestromung der Statorwicklungen abgeschaltet wird.

Das im Zusammenhang mit der elektrischen Maschine 404 in Fig. 4 beschriebene Verfahren umfassend die Schritte 501 bis 509 kann insbesondere auch verallgemeinert werden, insbesondere insofern zur Erwärmung des supraleitenden Materials 417 nicht ausschließlich die Heizfolie 421 verwendet werden muss. In einer nicht gezeigten Ausführungsform können auch anderen Heizmittel, beispielsweise Heizelemente, vorgesehen sein. Nach einer weiteren nicht gezeigten Ausführungsform kann der Stator 403 drei Wicklungen umfassen, welche bevorzugterweise jede über eine eigene DC-Stromquelle bestromt werden, wobei alternativ auch insbesondere eine gemeinsame DC-Stromquelle vorgesehen sein kann. Gemäß einer anderen nicht gezeigten Ausführungsform kann auch vorgesehen sein, dass der Stator 403 einen Umrichter aufweist, wobei dann dieser Umrichter zur Bestromung der Wicklungen verwendet werden kann. Es kann insofern hier in vorteilhafter Weise auf eine zusätzliche DC-Stromquelle verzichtet werden.

Die Erfindung umfasst also insbesondere den Gedanken, zur Aufmagnetisierung des supraleitenden Materials den Stator, insbesondere seine Statorwicklungen, zwecks entsprechender Bestromung zu verwenden. Dies bietet insbesondere den Vorteil, dass zur Aufmagnetisierung keine zusätzliche Spule oder zusätzliche Spulen, welche beispielsweise als eine HTS-Spule gebildet sein kann bzw. können, benötigt wird bzw. werden.

Durch das Verzichten auf eine solche zusätzliche Spule kann ebenfalls der Einsatz von in der Regel sehr teuren HTS-Bandleitern verzichtet werden. Die Herstellungskosten der elektrischen Maschine werden in vorteilhafter Weise reduziert. Gleichzeitig sinkt auch ein technischer und zeitlicher Fertigungsaufwand.

Weiterhin wird auch eine Betriebssicherheit erhöht, da nun keine Bestromung der zusätzlichen Spulen und damit auch keine berührungslose Bestromung der Spulen bzw. Schleifringe mehr benötigt werden. Damit entfällt ein entsprechendes Ausfallrisiko bzw. ein Wartungsaufwand für diese zusätzlichen Komponenten.

Des Weiteren wird die Kühlung des Rotors wesentlich vereinfacht, da keine zusätzlichen Spulen (mit potentieller Quenchgefahr) zu kühlen sind. Es gibt auch keine Stromzuführungen, die thermisch abgefangen und gekühlt werden müssten.

Darüber hinaus besteht auch nicht die Gefahr des Überhitzens bzw. Quenchens und Durchbrennens von HTS-Spulen, da keine HTS-Spulen im Rotor eingebaut sind. Das supraleitende Material am Rotor kann insofern in vorteilhafter Weise nicht durchbrennen. Damit ist ein solcher Rotor wesentlich sicherer und kann elektrisch nicht dauerhaft zerstört werden.

Da eine Rotormontage in der Regel bei einer Temperatur oberhalb der kritischen Temperatur stattfindet, ist das supraleitenden Material üblicherweise noch nicht magnetisiert, was eine einfachere Montage im Vergleich zu permanenterregten Maschinen ermöglicht.

Auch eine Demontage, das heißt insbesondere ein Entfernen des Rotors aus dem Stator, ist ebenfalls einfacher möglich, da sich der Rotor nach dem Abschalten des Kühlsystems erwärmt und dadurch das supraleitende Material bei ausgeschalteten Ständerstrom seine Magnetisierung verliert, sobald die Temperatur über die kritische Temperatur gestiegen ist.

Für eine besonders schnelle Demontage kann der Rotor schnell entmagnetisiert werden, indem mittels der Heizung das supraleitende Material, insbesondere bei ausgeschaltetem Ständerstrom, kurzzeitig über die kritische Temperatur erwärmt werden kann.

Nach einem Störfall, beispielsweise aufgrund einer Erwärmung des supraleitenden Materials durch längeren Ausfall des Kühlsystems, kann der Rotor mit dem supraleitenden Material nach erneutem Abkühlen problemlos wieder aufmagnetisiert und die elektrische Maschine in Betrieb genommen werden.

Bei der Aufmagnetisierung des supraleitenden Materials kann zur Versorgung der Statorwicklungen bzw. Statorspulen auch ein bereits vorhandener Umrichter verwendet werden. Insbesondere kann vorgesehen sein, dass die Steuerung in einen solchen Umrichter integriert ist, beispielsweise als Software.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektrische Maschine (101), umfassend:
- einen Stator (103),
- einen drehbar gelagerten Rotor (105) mit einem kühlbaren magnetisierbaren Rotorabschnitt (107) aus einem supraleitenden Material (417), wobei
- eine Steuerung (109) zum Steuern eines Statorstroms zum Induzieren eines magnetischen Flusses durch das supraleitende Material (417) gebildet ist,
**dadurch gekennzeichnet, dass**
- an dem Rotorabschnitt (107) eine Heizung für eine Erwärmung über die kritische Temperatur des supraleitenden Materials (417) angeordnet ist.

2. Elektrische Maschine (101) nach Anspruch 1, wobei die Steuerung (109) ferner ausgebildet ist, den Statorstrom abhängig von einer Temperatur des supraleitenden Materials (417) zu steuern.

3. Elektrische Maschine (101) nach Anspruch 1 oder 2, wobei die Steuerung (109) ferner ausgebildet ist, den Statorstrom abhängig von einem Rotormagnetfeld zu steuern.

4. Elektrische Maschine (101) nach einem der vorherigen Ansprüche, wobei der Rotor (105) einen mittels eines Kühlfluids kühlbaren Polkern (407) umfasst, an welchem der Rotorabschnitt (107)angeordnet ist.

5. Elektrische Maschine (101) nach Anspruch 4, wobei zwischen dem Polkern (407) und dem Rotorabschnitt (107) eine thermische Kopplungsschicht (419) gebildet ist.

6. Elektrische Maschine (101) nach einem der vorherigen Ansprüche, wobei die Heizung als eine Heizfolie (421) gebildet ist.

7. Verfahren zum Betreiben einer elektrischen Maschine (101), umfassend einen Stator (103) und einen drehbar gelagerten Rotor (105) mit einem kühlbaren magnetisierbaren Rotorabschnitt (107) aus einem supraleitenden Material (417), wobei
- an dem Rotorabschnitt (107) eine Heizung für eine Erwärmung über die kritische Temperatur des supraleitenden Materials (417) angeordnet ist,
- ein magnetischer Fluss durch das supraleitende Material (417) ausgebildet wird, indem ein Statorstrom zum Induzieren des magnetischen Flusses in dem supraleitenden Material (417) gesteuert wird und
- das supraleitende Material (417) nach dem Ausbilden des magnetischen Flusses auf eine Temperatur unterhalb der kritischen Temperatur des supraleitenden Materials (417) zum Verankern des magnetischen Flusses abgekühlt wird.

8. Verfahren nach Anspruch 7, wobei der Statorstrom abhängig von einer Temperatur des supraleitenden Materials (417) gesteuert wird.

9. Verfahren nach Anspruch 7 oder 8, wobei der Statorstrom abhängig von einem gemessenen Rotormagnetfeld gesteuert wird.

## Claims

1. Electric machine (101), comprising:
- a stator (103),
- a rotatably mounted rotor (105) having a coolable and magnetisable rotor section (107) made of a superconducting material (417), wherein
- a controller (109) is fashioned for controlling a stator current for inducing a magnetic flux through the superconducting material (417),
**characterised in that**
- a heater is arranged on the rotor section (107) for heating to above the critical temperature of the superconducting material (417).

2. Electric machine (101) according to claim 1, wherein the controller (109) is also designed to control the stator current as a function of a temperature of the superconducting material (417).

3. Electric machine (101) according to claim 1 or 2, wherein the controller (109) is also designed to control the stator current as a function of a rotor magnetic field.

4. Electric machine (101) according to one of the preceding claims, wherein the rotor (105) comprises a pole core (407) which can be cooled by means of a cooling fluid and on which the rotor section (107) is arranged.

5. Electric machine (101) according to claim 4, wherein a thermal connecting layer (419) is fashioned between the pole core (407) and the rotor section (107).

6. Electric machine (101) according to one of the preceding claims, wherein the heater is fashioned as a heating foil (421) .

7. Method for operating an electric machine (101), comprising a stator (103) and a rotatably mounted rotor (105) having a coolable, magnetisable rotor section (107) made of a superconducting material (417), wherein
- a heater is arranged on the rotor section (107) for heating to above the critical temperature of the superconducting material (417),
- a magnetic flux through the superconducting material (417) is formed by controlling a stator current for inducing the magnetic flux in the superconducting material (417) and
- after the formation of the magnetic flux, the superconducting material (417) is cooled to a temperature below the critical temperature of the superconducting material (417) to fix the magnetic flux.

8. Method according to claim 7, wherein the stator current is controlled as a function of a temperature of the superconducting material (417).

9. Method according to claim 7 or 8, wherein the stator current is controlled as a function of a measured rotor magnetic field.

## Revendications

1. Machine (101) électrique, comprenant :
- un stator (103),
- un rotor (105) monté tournant et ayant une partie (107) pouvant être refroidie et aimantée en un aimant (417) supraconducteur, dans lequel
- une commande (109) pour commander un courant statorique est formée pour induire un flux magnétique dans le matériau (417) supraconducteur,
**caractérisée en ce que**
- sur la partie (107) du rotor, est disposé un chauffage pour porter le matériau (417) supraconducteur au-dessus de la température critique.

2. Machine (101) électrique suivant la revendication 1, dans laquelle la commande (109) est constituée, en outre, pour commander le courant statorique en fonction d'une température du matériau (417) supraconducteur.

3. Machine (101) électrique suivant la revendication 1 ou 2, dans laquelle la commande (109) est constituée, en outre, pour commander le courant statorique en fonction d'un champ magnétique du rotor.

4. Machine (101) électrique suivant l'une des revendications précédentes, dans laquelle le rotor (105) comprend un noyau (407) polaire, qui peut être refroidi au moyen d'un fluide de refroidissement et sur lequel est disposée la partie (107) du rotor.

5. Machine (101) électrique suivant la revendication 4, dans laquelle une couche (419) de couplage thermique est formée entre le noyau (407) polaire et la partie (107) du rotor.

6. Machine (101) électrique suivant l'une des revendications précédentes, dans laquelle le chauffage est sous la forme d'une feuille (421) de chauffage.

7. Procédé pour faire fonctionner une machine (101) électrique, comprenant un stator (103) et un rotor (105) monté tournant et ayant une partie (107) pouvant être refroidie et aimantée en un matériau (417) supraconducteur, dans lequel
- sur la partie (107) du rotor, est disposé un chauffage pour porter le matériau (417) supraconducteur au-dessus de la température critique,
- on constitue un flux magnétique dans le matériau (417) supraconducteur, en commandant un courant statorique pour induire le flux magnétique dans le matériau (417) supraconducteur et
- on refroidit le matériau (417) supraconducteur, après la constitution du flux magnétique, à une température inférieure à la température critique du matériau (417) supraconducteur pour ancrer le flux magnétique.

8. Procédé suivant la revendication 7, dans lequel on commande le courant statorique en fonction d'une température du matériau (417) supraconducteur.

9. Procédé suivant la revendication 7 ou 8, dans lequel on commande le courant statorique en fonction d'un champ magnétique mesuré du rotor.
